# FASCICULE DE BREVET EUROPEEN

(11) **EP 3 880 735 B1**
(45) Date de publication et mention de la délivrance du brevet: **12.02.2025**
(21) Numéro de dépôt: 19828287.3
(22) Date de dépôt: 15.11.2019
(51) Int. Cl.: C08G 65/40, B29C 67/04, C08G 65/46, C08L 71/10, B33Y 70/00

(54) **POUDRE DE POLY(ETHER-CETONE-CETONE) REUTILISABLE POUR PROCEDE DE FRITTAGE**
WIEDERVERWENDBARES POLY(ETHER-KETON-KETON)-PULVER FÜR SINTERVERFAHREN
REUSABLE POLY(ETHER-KETONE-KETONE) POWDER FOR SINTERING METHOD

(30) Priorité: 15.11.2018 FR 1860538
(43) Date de publication de la demande: 22.09.2021
(73) Titulaire: ARKEMA FRANCE, 92700 Colombes (FR)
(72) Inventeur: LE, Guillaume, 27470 SERQUIGNY (FR); BRULE, Benoît, 27470 SERQUIGNY (FR); ILIOPOULOS, Ilias, 75013 PARIS (FR)
(74) Mandataire: Arkema Patent
(86) Numéro de dépôt international: PCT/FR2019/052720
(87) Numéro de publication internationale: WO 2020/099803

(56) Documents cités:
- WO-A1-2013/085947
- WO-A1-90/10024
- WO-A2-02/096974
- CN-A- 106 008 960
- CN-A- 106 117 544
- CN-A- 106 146 828
- FR-A1- 3 029 830
- FR-A1- 3 050 993
- US-A- 4 611 033
- US-A1- 2015 183 918

## Description

### DOMAINE DE L'INVENTION

La présente invention concerne une poudre de poly(éther-cétone-cétone) réutilisable pour procédé de frittage.

### ARRIERE-PLAN TECHNIQUE

Les poly(aryl-éther-cétones) (PAEK) et plus particulièrement les poly(éther-cétone-cétones) (PEKK) sont des matériaux très performants. Ils sont utilisés pour des applications contraignantes en température et/ou en contraintes mécaniques, voire chimiques. On retrouve ces polymères dans des domaines aussi variés que l'aéronautique et le spatial, les forages off-shore, l'automobile, le ferroviaire, la marine, l'éolien, le sport, le bâtiment, l'électronique ou encore les implants médicaux. Ils peuvent être mis en oeuvre par toutes les technologies de mise en oeuvre des thermoplastiques, tels que le moulage, la compression, l'extrusion, le filage, le poudrage ou encore le prototypage par frittage.

Dans le cas du frittage de la poudre par rayonnement électromagnétique, une grande partie de la poudre n'est pas utilisée au cours de chaque construction, aussi appelée « *run* ». Typiquement, environ 85 à 90 % en poids de la poudre introduite dans la machine de frittage n'est pas touchée par le rayonnement électromagnétique. Il apparait donc fondamental, pour des raisons économiques, de pouvoir réutiliser cette poudre, c'est-à-dire la recycler, lors de la (des) construction(s) suivante(s).

En général, lors d'une construction par frittage laser, la poudre de PEKK est chauffée à une température T dénommée « *température de construction »,* en dessous de sa température de fusion Tf. Or, lors d'une construction par frittage, la poudre environnante, c'est-à-dire la poudre non touchée par le rayonnement électromagnétique, reste plusieurs heures, voire plusieurs dizaines d'heures selon la complexité de la pièce à construire, à cette température, ce qui peut entrainer une évolution à la structure du polymère constitutif de la poudre avec par exemple une augmentation de sa masse moléculaire. Cette augmentation de masse moléculaire entraine une augmentation de viscosité qui devient un frein à la coalescence entre les grains de poudre au cours des runs successifs.

Du fait de ce changement de structure, il devient difficile voire impossible de recycler la poudre car, soit il devient impossible de fritter la poudre, soit les propriétés mécaniques de la pièce tridimensionnelle, obtenue par frittage d'une telle poudre recyclée, s'en trouvent diminuées et insuffisantes par la présence par exemple de porosités dans les pièces frittées.

Il existe actuellement sur le marché une poudre de PAEK, commercialisée sous la référence PEEK HP3 par la société EOS, qui peut être utilisée en frittage laser. Cependant, dès le premier run, la poudre subit une dégradation thermique telle, qu'il n'est pas possible de la réutiliser pour une deuxième construction. Par conséquent, la fabrication des objets tridimensionnels par frittage de cette poudre est beaucoup trop coûteuse et ne peut pas être envisagée à l'échelle industrielle.

Le document US2013/0217838 propose une solution pour pouvoir recycler une poudre de PAEK en frittage laser. Il décrit plus particulièrement la possibilité de recycler une poudre de PEKK, à condition d'augmenter la température de construction de 285°C à 300°C et d'augmenter la puissance du faisceau laser à chaque recyclage de la poudre, lors des runs successifs. Ce document décrit en effet que la poudre de PEKK utilisée n'est pas stable en température et que sa température de fusion augmente après sa première utilisation dans un procédé de frittage. Pour pouvoir contrer cette instabilité de la poudre, les paramètres de la machine de frittage sont modifiés. La puissance du faisceau laser, notamment, est augmentée à chaque run. Le fait de devoir changer ces paramètres de frittage à chaque run ralentit et rend plus difficile la production industrielle. De plus, il apparait difficile de mélanger de la poudre non recyclée avec une poudre recyclée, car les paramètres de construction sont alors complexes à régler. Enfin, le fait de devoir modifier les paramètres à chaque run, et notamment augmenter la température de construction, entraine une dégradation de la poudre de polymère, si bien que le nombre de recyclages de la poudre reste encore trop limité et il serait économiquement avantageux de pouvoir la recycler davantage.

Le document US 5,008,364 décrit des matériaux thermoplastiques stables à des hautes températures, comprenant des poly(aryle-éther-sulfones) et optionnellement des PAEK, les PAEK comprenant moins de 100 ppm de métaux alcalins.

Le document WO 90/10024 décrit l'extraction des résiduels métalliques (tels que le Al, Fe, Mg, Ni, Cr) dérivant des catalyseurs utilisés pour la préparation des PEKK par un acide α-hydrocarboxylique, afin d'améliorer la couleur ainsi que la stabilité thermique du polymère.

Le document US 4,611,033 décrit un procédé de stabilisation de PAEK par traitement du polymère avec un agent complexant de type dicétone afin de réduire les résiduels métalliques qui proviennent des catalyseurs utilisés pour la préparation du polymère.

Le document US 3,925,307 décrit l'utilisation d'un oxyde métallique amphotère pour stabiliser les PAEK et augmenter leur résistance à l'oxydation. L'oxyde métallique peut être choisi parmi l'oxyde d'aluminium, l'oxyde de béryllium, l'oxyde de bismuth, l'oxyde de cadmium, l'oxyde de cérium, l'oxyde de gallium, l'oxyde de germanium, l'oxyde de zinc...

Le document WO 90/01510 décrit un procédé de traitement de PAEK comprenant le chauffage du polymère à une certaine température pour un temps déterminé, afin d'enlever les impuretés présentes dues aux catalyseurs utilisés (résiduels Al et Cl).

Les documents CN 106146828, CN 106117544 et CN 106008960 décrivent des méthodes qui visent à diminuer la concentration d'aluminium présent dans les PEKK.

Le document GB 2376019 décrit la purification des PAEK et de préférence des PEEK de sorte à éliminer les ions sodium ainsi que les impuretés de phosphore et de soufre.

Le document WO 2017/149233 décrit une poudre de PAEK apte à être utilisée plusieurs fois dans des procédés de frittage grâce à un pré-traitement thermique qui a comme résultat la stabilisation de sa température de fusion.

L'article « The effects of manganèse ions on rheology and thermal properties of polyether ether ketone » (High performance polymers, 2017, vol. 29 (4), p.377-385) décrit l'influence du manganèse sur la viscosité des PEEK.

FR 3 029 830 A1 décrit l'utilisation d'un produit KEPSTAN 6002 pour la construction d'objets tridimensionnels.

Les documents FR 3 050 993 A1, CN 106 146 828 A, CN 106 117 544 A, WO 90/10024 A1, US 4 611 033 A décrivent des procédés de purification de poly(éther-cétone-cétone) en vue de limiter sa teneur en impuretés métalliques, notamment d'aluminium.

Il existe donc un réel besoin de fournir des poudres de PEKK aptes à être utilisées plusieurs fois dans des procédés de frittage successifs, dont les paramètres restent inchangés, afin faciliter l'obtention d'articles tridimensionnels à l'échelle industrielle.

### RESUME DE L'INVENTION

L'invention concerne en premier lieu une poudre de poly(éther-cétone-cétone) comprenant une teneur massique de 1 à 100 ppm de Fe.

Dans certains modes de réalisation, la poudre a été soumise à un traitement thermique.

Dans certains modes de réalisation, le traitement thermique est réalisé à une température de l'ordre de 10 à 60°C en dessous de la température de fusion de la poudre.

Dans certains modes de réalisation, la poudre est caractérisée en ce qu'elle comprend une teneur massique en éther aromatique de 0 à 0,4 % et/ou une teneur massique en aluminium inférieure à 1000 ppm, de préférence inférieure à 600 ppm et encore de préférence inférieure à 500 ppm.

Dans certains modes de réalisation, l'éther aromatique est le (1,4-phénoxybenzoyl)benzène.

Dans certains modes de réalisation, la poudre est caractérisée en ce qu'elle comprend une teneur massique en métaux non-alcalins autres que le fer et l'aluminium inférieure à 100 ppm, de préférence inférieure à 50 ppm, et encore de préférence inférieure à 10 ppm.

L'invention concerne également un procédé de construction d'objet tridimensionnel couche-par-couche par frittage d'une poudre provoqué par un rayonnement électromagnétique, caractérisé en ce que la poudre utilisée est telle que décrite ci-dessus.

Dans certains modes de réalisation, la poudre est au moins en partie recyclée d'une construction précédente d'objet tridimensionnel couche-par-couche par frittage de poudre provoqué par un rayonnement électromagnétique.

Dans certains modes de réalisation, au moins une partie de la poudre a fait l'objet d'au moins 2 recyclages, de préférence d'au moins 3 recyclages, de préférence encore d'au moins 5 recyclages.

Dans certains modes de réalisation, au moins une partie de la poudre a été soumise à une température de 260 à 290°C pendant une durée cumulée d'au moins 2 heures, de préférence d'au moins 10 heures, de préférence encore d'au moins 24 heures, de préférence encore d'au moins 72 heures.

L'invention concerne également l'utilisation de la poudre telle que décrite ci-dessus, dans le procédé tel que décrit ci-dessus, ladite poudre étant réutilisable dans plusieurs constructions successives.

L'invention concerne également un article tridimensionnel obtenu à partir de la poudre telle que décrite ci-dessus, par le procédé tel que décrit ci-dessus.

La présente invention permet de surmonter les inconvénients de l'état de la technique. Elle fournit plus particulièrement une poudre de PEKK apte à être utilisée plusieurs fois dans des procédés de frittage successifs, dont les paramètres restent inchangés, afin de faciliter l'obtention d'articles tridimensionnels à l'échelle industrielle.

Cela est accompli notamment grâce à l'utilisation d'une poudre à faible teneur en fer (Fe), qui garde ses caractéristiques structurales et thermiques et qui permet également le recyclage et la réutilisation de la poudre dans des procédés de frittage successifs. Les pièces obtenues présentent des propriétés mécaniques satisfaisantes.

Le PEKK peut en effet contenir une certaine quantité de Fe qui peut provenir des matières premières et/ou des catalyseurs utilisés pour la synthèse du PEKK, ainsi que des équipements utilisés. A partir d'une certaine concentration, la présence de fer dans la poudre de polymère favorise le changement de structure du polymère ce qui rend le recyclage de la poudre difficile, voire impossible. Il a été découvert qu'une poudre de PEKK contenant de 1 à 10 ppm de Fe (en masse) présente de très bonnes propriétés de recyclabilité.

Avantageusement, l'invention permet dans certains modes de réalisation, grâce notamment à un traitement thermique, l'obtention d'une poudre de morphologie cristalline stable, c'est-à-dire une poudre qui ne subit pas de fusion jusqu'à la température de construction. D'ailleurs, la présence de plusieurs températures de fusion différentes peut affecter la qualité du frittage.

Avantageusement encore, l'invention permet dans certains modes de réalisation, grâce à la présence d'un agent d'écoulement, l'obtention d'une poudre qui présente une bonne coulabilité qui est conservée même après un séjour en atmosphère humide.

Avantageusement encore, l'invention permet dans certains modes de réalisation, grâce à une poudre avec une teneur faible en éther aromatique et en métaux non-alcalins, notamment en aluminium, un procédé de frittage efficace. Plus précisément, en diminuant la quantité des composés susceptibles de se vaporiser, on élimine la génération des vapeurs de ces composés qui sont capables d'encrasser la lentille du système optique de l'équipement de frittage et donc de réduire l'efficacité du frittage.

### DESCRIPTION DE MODES DE REALISATION DE L'INVENTION

L'invention est maintenant décrite plus en détail et de façon non limitative dans la description qui suit.

### Poudre de PEKK

L'invention concerne une poudre de poly(éther-éther-cétone) (PEKK) comprenant de 1 à 10 ppm de Fe (en masse).

La poudre de l'invention peut comprendre un seul PEKK.

Alternativement, la poudre de l'invention peut comprendre un mélange de deux ou plusieurs PEKK de structure chimique différente.

Le PEKK est un polymère comportant une succession de motifs répétés de formule I et/ou de formule II suivantes :

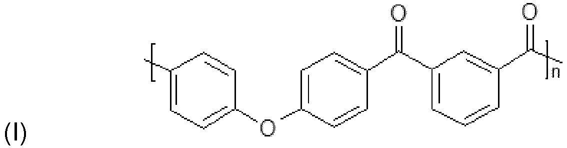

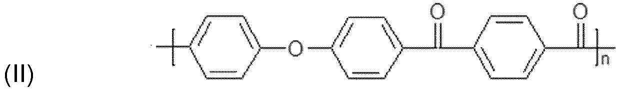

Dans ces formules, n est un nombre entier.

Les motifs de formule I sont des motifs dérivés de l'acide isophtalique (ou motifs I), tandis que les motifs de formule II sont des motifs dérivés de l'acide téréphtalique (ou motifs T).

Dans le PEKK utilisé dans l'invention, la proportion massique de motifs T par rapport à la somme des motifs T et I peut varier de 0 à 5 % ; ou de 5 à 10 % ; ou de 10 à 15 % ; ou de 15 à 20 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 35 à 100%, notamment de 45 à 85 % et plus spécifiquement encore de 50 à 80 %, sont particulièrement appropriées. Dans l'ensemble des gammes énoncées dans la présente demande, les bornes sont incluses sauf mention contraire.

De préférence, le PEKK utilisé dans l'invention a une proportion massique de motifs T par rapport à la somme des motifs T et I d'environ 60 %.

Le choix de la proportion massique de motifs T par rapport à la somme des motifs T et I est l'un des facteurs qui permet d'ajuster la température de fusion et la vitesse de cristallisation à une température donnée du PEKK. Une proportion massique donnée de motifs T par rapport à la somme des motifs T et I peut être obtenue en ajustant les concentrations respectives des réactifs lors de la polymérisation, de manière connue en soi.

Le fer est dosé par la méthode ICP-AES optique en utilisant un appareil Varian ICP Vista Pro. Dans un premier temps, 0,5 g d'un échantillon sont introduits dans un flacon (DigiTUBE), puis on ajoute 10 mL d'acide nitrique à 67 %. Le mélange est chauffé pendant 2 heures à 99°C dans un bloc chauffant, filtré sur un filtre Whatman (589/1 diamètre 125 mm) et introduit dans une fiole jaugée. De l'eau filtrée et déionisée (purificateur Milli-Q) est ajoutée afin de compléter jusqu'au trait de la jauge (volume final : 25 mL). Pour la quantification, un étalonnage est effectué. L'étalon passe avant et après l'échantillon afin de contrôler la dérive. La longueur d'onde appliquée pour mesurer la teneur en fer est 259,94 nm.

Des mesures susceptibles d'être prises lors de la fabrication de la poudre de PEKK pour éviter la présence d'une teneur trop importante de Fe sont les suivantes :
- s'assurer que les matières premières utilisées contiennent peu de fer (y compris l'acide de Lewis utilisé et les solvants, dont l'eau) ;
- filtrer les liquides pour éliminer les particules étrangères ;
- s'assurer d'une propreté élevée des équipements de production ;
- travailler en milieu confiné le plus possible jusqu'au conditionnement du produit fini ; et
- travailler avec des équipements composés de matériaux compatibles pouvant résister durablement à la corrosion.

La poudre de PEKK peut contenir, outre du PEKK, un ou plusieurs autres polymères, notamment thermoplastiques, appartenant ou non à la famille des PAEK (polyaryléther cétones). De tels PAEK peuvent notamment inclure les polyéther-cétones (PEK), les polyéther-éther-cétones (PEEK), les polyéther-éther-cétone-cétones (PEEKK), les polyéther-cétone-éther-cétone-cétones (PEKEKK), les polyéther-éther-cétone-éther-cétones (PEEKEK), les polyéther-éther-éther-cétones (PEEEK), les polyéther-diphényle-éther-cétones (PEDEK), leurs mélanges et leurs copolymères entre eux ou avec d'autres membres de la famille des PAEK.

De préférence, le PEKK représente, en poids, au moins 50 %, de préférence encore au moins 70 %, ou au moins 80 %, ou au moins 90 % de l'ensemble des polymères présents.

Dans des modes de réalisation particuliers, seul le PEKK est présent en tant que polymère dans la poudre (exception faite d'éventuels charges ou additifs fonctionnels).

La poudre de PEKK peut également comprendre un agent d'écoulement hydrophile ou hydrophobe.

Dans certains modes de réalisation, la poudre comprend de 0,01 à 0,4 % en poids d'agent d'écoulement, de préférence de 0,01 à 0,2 % en poids d'agent d'écoulement et encore de préférence de 0,01 à 0,1 % en poids d'agent d'écoulement.

La poudre peut par exemple comprendre de 0,01 à 0,05 % en poids d'agent d'écoulement, ou de 0,05 à 0,1 % en poids d'agent d'écoulement, ou de 0,1 à 0,2 % en poids d'agent d'écoulement, ou de 0,2 à 0,3 % en poids d'agent d'écoulement, ou de 0,3 à 0,4 % en poids d'agent d'écoulement.

La poudre de PEKK peut comprendre en outre des additifs et/ou des charges.

Parmi les charges, citons les charges renforçantes, notamment des charges minérales telles que le noir de carbone, des nanotubes, de carbone ou non, des fibres (verre, carbone...), broyées ou non. La poudre de PEKK peut ainsi comprendre moins de 60 % en masse de charges, et de préférence moins de 40 % en masse de charges.

Parmi les additifs, on peut citer les agents stabilisants (lumière, en particulier UV, et chaleur), les azurants optiques, colorants, pigments, les additifs absorbeurs d'énergie (dont absorbeurs d'UV) ou une combinaison de ces charges ou additifs.

La poudre de PEKK peut ainsi comprendre moins de 5 % en masse d'additifs, et de préférence moins de 1 % en masse d'additifs.

La poudre selon l'invention peut présenter une teneur en éther aromatique de 0 à 0,4 % massique. De préférence cette teneur est de 0 à 0,3 % massique, et encore de préférence de 0 à 0,2 % massique. Par « *éther aromatique »* on entend des composés de masse molaire inférieure à 500 g/mol, tel que le 1,4 bis(4-phénoxybenzoylbenzène) dont la masse molaire est de 470 g/mol.

De manière préférentielle, l'éther aromatique est le (1,4-phénoxybenzoyl)benzène.

La poudre de PEKK peut également présenter une teneur massique en Al inférieure à 1000 ppm, de préférence inférieure à 600 ppm, de préférence inférieure à 500 ppm, de préférence inférieure à 400 ppm, de préférence inférieure à 300 ppm, de préférence inférieure à 200 ppm, et encore de préférence inférieure à 100 ppm.

Ainsi, la teneur massique en Al dans la poudre de PEKK peut notamment être de 1000 à 900 ppm ; ou de 900 à 800 ppm ; ou de 800 à 700 ppm ; ou de 700 à 600 ppm ; ou de 600 à 500 ppm ; ou de 500 à 400 ppm ; ou de 400 à 300 ppm ; ou de 300 à 200 ppm ; ou de 200 à 100 ppm ; ou inférieure à 100 ppm.

La poudre de PEKK peut également présenter une teneur massique en métaux non-alcalins (autres que le fer et l'aluminium) inférieure à 100 ppm, de préférence inférieure à 60 ppm, de préférence inférieure à 50 ppm, de préférence inférieure à 40 ppm, de préférence inférieure à 30 ppm, de préférence inférieure à 20 ppm, et encore de préférence inférieure à 10 ppm.

Ainsi, la teneur massique en métaux non-alcalins (autres que le fer et l'aluminium) peut notamment être de 100 à 90 ppm ; ou de 90 à 80 ppm ; ou de 80 à 70 ppm ; ou de 70 à 60 ppm ; ou de 60 à 50 ppm ; ou de 50 à 40 ppm ; ou de 40 à 30 ppm ; ou de 30 à 20 ppm ; ou de 20 à 10 ppm ; ou inférieure à 10 ppm.

Il est fait référence à cet égard au document WO 2017/194855 pour une description détaillée de ces caractéristiques.

La poudre de PEKK peut avoir une température de fusion inférieure à 330°C, de préférence inférieure ou égale à 320°C, et encore de préférence inférieure ou égale à 310°C.

### Procédé de frittage

La poudre de PEKK, telle que décrite ci-dessus, est utilisée pour un procédé de construction d'objet tridimensionnel couche-par-couche par frittage provoqué par un rayonnement électromagnétique.

Le rayonnement électromagnétique peut être par exemple un rayonnement infrarouge, un rayonnement ultraviolet, ou de préférence un rayonnement laser. Selon un mode de réalisation particulier, le rayonnement électromagnétique comprend un rayonnement infrarouge et un rayonnement laser en combinaison.

Selon le procédé, une fine couche de poudre est déposée sur une plaque horizontale maintenue dans une enceinte chauffée à une température appelée température de construction. Le terme *« température de construction* » désigne la température à laquelle le lit de poudre, d'une couche constitutive d'un objet tridimensionnel en construction, est chauffé pendant le procédé de frittage couche-par-couche de la poudre. Cette température peut être inférieure à la température de fusion de la poudre de moins de 50°C, de préférence de moins de 40°C, de préférence encore de moins de 30°C, et encore de préférence de 20°C environ. Alternativement, cette température peut être inférieure à la température de fusion de la poudre d'une valeur de 80 à 100°C. L'énergie nécessaire à fritter les particules de poudre en différents points de la couche de poudre est ensuite apportée par un rayonnement électromagnétique selon une géométrie correspondant à un objet (par exemple à l'aide d'un ordinateur ayant en mémoire la forme d'un objet et restituant cette dernière sous forme de tranches). Plusieurs passages de rayonnement électromagnétique peuvent être nécessaires dans certains cas.

La température de fusion peut être mesurée selon la norme ISO 11357-3 Plastics - Differential scanning calorimetry (DSC) Part 3. La poudre de PEKK peut éventuellement présenter plusieurs pics de fusion dans l'analyse de DSC, dus à la présence de différentes formes cristallines. Ainsi, dans le cadre de la présente demande, par « *température de fusion* » on entend la température de fusion correspondant au pic de fusion le plus élevé lorsque plusieurs pics de fusion sont présents.

Ensuite, la plaque horizontale est abaissée d'une distance correspondant à l'épaisseur d'une couche de poudre, et une nouvelle couche est déposée. Le laser apporte l'énergie nécessaire à fritter les particules de poudre selon une géométrie correspondant à cette nouvelle tranche de l'objet et ainsi de suite. La procédure est répétée jusqu'à ce que l'on ait fabriqué l'objet.

Dans certains modes de réalisation, la poudre de PEKK destinée à être utilisée dans un procédé de construction d'objet tridimensionnel couche-par-couche par frittage provoqué par un rayonnement électromagnétique, est issue d'un traitement thermique préalable, réalisé à une température de 260 à 290°C et de préférence de 280 à 290°C.

Comme mentionné ci-dessus, le polymère PEKK qui constitue la poudre initiale, obtenue directement après la synthèse, peut présenter plusieurs températures de fusion dues à la présence de différentes formes cristallines, ce qui peut affecter la qualité du frittage. Ainsi, le traitement thermique préalable à l'étape de frittage, permet l'obtention d'une poudre de morphologie cristalline stable, c'est-à-dire une poudre qui ne subit pas de fusion jusqu'à la température de construction.

La durée du traitement thermique peut être de 5 à 120 min, de préférence de 4 à 60 min et encore de préférence de 5 à 30 min.

Ainsi, la durée du traitement thermique peut être par exemple de 5 à 10 min, ou de 10 à 15 min, ou de 15 à 20 min, ou de 20 à 25 min, ou de 25 à 30 min, ou de 30 à 45 min, ou de 45 à 60 min, ou de 60 à 90 min, ou de 90 à 120 min.

Le procédé de construction couche-par-couche par frittage de la poudre au moyen d'un rayonnement électromagnétique est alors réalisé à une température de construction du même ordre de grandeur que celle du traitement thermique préalable. De préférence la température de construction est inférieure à 295°C.

La poudre de PEKK, telle que décrite ci-dessus, peut être recyclée et réutilisée dans plusieurs constructions successives. Elle peut par exemple être utilisée telle qu'elle est ou en mélange avec d'autres poudres recyclées ou non.

Ainsi, la poudre peut être recyclée (c'est-à-dire utilisée dans plus d'une construction) une fois, ou deux fois, ou trois fois, ou quatre fois, ou cinq fois, ou plus de cinq fois.

La poudre obtenue après recyclage peut avoir été soumise (en tout) à une température de 260 à 290°C pendant une durée cumulée d'au moins 2 heures, notamment de 2 à 5 heures, ou de 5 à 10 heures, ou de 10 à 24 heures, ou de 24 à 48 heures, ou de 48 à 72 heures, ou de plus de 72 heures.

### EXEMPLES COMPARATIFS

Pour étudier la recyclabilité du PEKK dans un procédé de frittage, on a utilisé une poudre de PEKK commercialisée par la société ARKEMA sous le nom de Kepstan^{™} 6002PF. Cette poudre contient une teneur en fer d'environ 20 ppm.

Du fer, sous forme de FeCl₂ (50, 100 et 120 ppm) sous forme de poudre ou sous forme de solution aqueuse pour privilégier l'imprégnation a été ajouté à la poudre pour étudier l'impact du fer sur l'évolution de la couleur et la viscosité du PEKK.

Afin de simuler les contraintes thermiques que subit une poudre de PEKK dans un procédé de frittage, la poudre est introduite dans un tube en verre et est ensuite chauffée à 285°C sous atmosphère inerte (après inertage de la poudre à température ambiante).

Des prélèvements sont effectués au cours du temps.

Pour toutes les poudres prélevées, l'indice de jaune Yi a été mesuré à partir de pastilles fabriquées à température ambiante à partir de flocons de PEKK avec un moule de diamètre 13 mm dans une presse Carver (modèle 38-56), en soumettant ces flocons à une pression de 2 tonnes pendant 10 secondes à température ambiante. Chaque pastille a une épaisseur d'environ 4 mm.

### Exemple 1-Impact du fer sur l'évolution de la couleur de la poudre

La poudre de départ (sans ajout de Fe) présente un Yi de 15,8.

La mesure du Yi sur les pastilles est présentée dans le tableau ci-dessous.

| Référence | Yi (après 7 jours) | ΔYi (après 7 jours) |
|---|---|---|
| Kepstan^{™} 6002PF | 37 | 134 % |
| Kepstan^{™} 6002PF +50ppm Fe en solution aq. | 35,2 | 123 % |
| Kepstan^{™} 6002PF +100 ppm Fe | 38,3 | 142 % |
| Kepstan^{™} 6002PF +120 ppm Fe en solution aq. | 42 | 166 % |

Après 7 jours, la poudre de départ présente un Yi de 37 et elle a donc subi une augmentation de 134 % de Yi. La présence de Fe ajouté (50 ppm ou 100 ppm) influence légèrement le Yi par rapport à la poudre initiale (augmentation de 123 % et 142 % respectivement).

Cependant lorsque le PEKK contient 120 ppm de Fe ajouté, la poudre de PEKK présente un Yi fortement affecté (augmentation de 166 %).

### Exemple 2- Impact du fer sur l'évolution de la viscosité

Une analyse de la viscosité intrinsèque dans l'acide sulfurique à 96 % sur les PEKK après 3 jours et 7 jours a été effectuée, afin d'estimer l'impact du fer sur l'évolution de la viscosité du PEKK.

La poudre de départ (sans ajout de Fe) présente une viscosité intrinsèque (VI) de 0,975 dL/g.

Les valeurs de viscosité intrinsèque des différentes poudres après 3 jours et 7 jours sont présentées dans le tableau ci-dessous.

| Référence | VI après 3 jours (dL/g) | Augmentation de la VI (après 3 jours) | VI après 7 jours (dL/g) | Augmentation de la VI (après 7 jours) |
|---|---|---|---|---|
| Kepstan^{™} 6002PF | 1,098 | 13 % | 1,279 | 31 % |
| Kepstan^{™} 6002PF + 50 ppm Fe | 1,084 | 11 % | 1,340 | 37 % |
| Kepstan^{™} 6002PF + 120 ppm Fe | 1,220 | 25 % | 1,703 | 75 % |

Après 3 jours, la poudre de départ présente une viscosité intrinsèque de 1,098 dL/g et elle a donc subi une augmentation de 13 % de viscosité intrinsèque. Après 7 jours, la poudre de départ présente une viscosité intrinsèque de 1,279 dL/g et elle a donc subit une augmentation de 31 % de viscosité intrinsèque.

Aucune différence significative entre la poudre de PEKK et le celle contenant 50 ppm de Fe ajouté n'a été observée. En revanche la poudre de PEKK contenant 120 ppm de Fe se démarque par une valeur de Yi augmentée de 75%.

## Revendications

1. Poudre de poly(éther-cétone-cétone) comprenant une teneur massique de 1 à 10 ppm de Fe.

2. Poudre selon la revendication 1, ayant été soumise à un traitement thermique.

3. Poudre selon la revendication 2, dans laquelle le traitement thermique est réalisé à une température de l'ordre de 10 à 60°C en dessous de la température de fusion de la poudre, ou de l'ordre de 80 à 100°C en dessous de la température de fusion de la poudre.

4. Poudre selon l'une des revendications 1 à 3, **caractérisée en ce qu'**elle comprend une teneur massique en éther aromatique de 0 à 0,4 % et/ou une teneur massique en aluminium inférieure à 1000 ppm, de préférence inférieure à 600 ppm et encore de préférence inférieure à 500 ppm.

5. Poudre selon la revendication 4, dans laquelle l'éther aromatique est le (1,4-phénoxybenzoyl)benzène.

6. Poudre selon l'une des revendications 1 à 5, **caractérisée en ce qu'**elle comprend une teneur massique en métaux non-alcalins autres que le fer et l'aluminium inférieure à 100 ppm, de préférence inférieure à 50 ppm, et encore de préférence inférieure à 10 ppm.

7. Procédé de construction d'objet tridimensionnel couche-par-couche par frittage d'une poudre provoqué par un rayonnement électromagnétique, **caractérisé en ce que** la poudre utilisée est conforme à l'une des revendications 1 à 6.

8. Procédé selon la revendication 7, dans lequel la poudre est au moins en partie recyclée d'une construction précédente d'objet tridimensionnel couche-par-couche par frittage de poudre provoqué par un rayonnement électromagnétique.

9. Procédé selon la revendication 8, dans lequel au moins une partie de la poudre a fait l'objet d'au moins 2 recyclages, de préférence d'au moins 3 recyclages, de préférence encore d'au moins 5 recyclages.

10. Procédé selon l'une des revendications 7 ou 8, dans lequel au moins une partie de la poudre a été soumise à une température de 260 à 290°C pendant une durée cumulée d'au moins 2 heures, de préférence d'au moins 10 heures, de préférence encore d'au moins 24 heures, de préférence encore d'au moins 72 heures.

11. Utilisation de la poudre selon l'une des revendications 1 à 6, dans le procédé selon l'une des revendications 7 à 10, ladite poudre étant réutilisable dans plusieurs constructions successives.

12. Article tridimensionnel obtenu à partir de la poudre selon l'une des revendications 1 à 6, par le procédé selon l'une des revendications 7 à 10.

## Patentansprüche

1. Polyetherketonketon-Pulver, das einen Massengehalt an Fe von 1 bis 10 ppm aufweist.

2. Pulver nach Anspruch 1, das einer Wärmebehandlung unterzogen worden ist.

3. Pulver nach Anspruch 2, wobei die Wärmebehandlung bei einer Temperatur in der Größenordnung von 10 bis 60 °C unterhalb der Schmelztemperatur des Pulvers oder in der Größenordnung von 80 bis 100 °C unterhalb der Schmelztemperatur des Pulvers ausgeführt wird.

4. Pulver nach einem der Ansprüche 1 bis 3, **dadurch gekennzeichnet, dass** es einen Massengehalt an aromatischem Ether von 0 bis 0,4 % und/oder einen Massengehalt an Aluminium von weniger als 1000 ppm, bevorzugt weniger als 600 ppm und noch bevorzugter weniger als 500 ppm aufweist.

5. Pulver nach Anspruch 4, wobei der aromatische Ether das 1,4-Phenoxybenzoylbenzol ist.

6. Pulver nach einem der Ansprüche 1 bis 5, **dadurch gekennzeichnet, dass** es einen Massengehalt an anderen Nichtalkalimetallen als Eisen und Aluminium von weniger als 100 ppm, bevorzugt weniger als 50 ppm und noch bevorzugter weniger als 10 ppm aufweist.

7. Verfahren zur schichtweisen Konstruktion eines dreidimensionalen Objekts durch Sintern eines Pulvers, das durch eine elektromagnetische Strahlung bewirkt wird, **dadurch gekennzeichnet, dass** das verwendete Pulver einem der Ansprüche 1 bis 6 entspricht.

8. Verfahren nach Anspruch 7, wobei das Pulver zumindest teilweise aus einer vorhergehenden schichtweisen Konstruktion eines dreidimensionalen Objekts durch Sintern von Pulver, das durch eine elektromagnetische Strahlung bewirkt wird, recycelt wird.

9. Verfahren nach Anspruch 8, wobei mindestens ein Teil des Pulvers Gegenstand von mindestens 2 Recyclingvorgängen, bevorzugt mindestens 3 Recyclingvorgängen, noch bevorzugter mindestens 5 Recyclingvorgängen war.

10. Verfahren nach einem der Ansprüche 7 oder 8, wobei mindestens ein Teil des Pulvers einer Temperatur von 260 bis 290 °C während einer Gesamtdauer von mindestens 2 Stunden, bevorzugt mindestens 10 Stunden, noch bevorzugter mindestens 24 Stunden, noch bevorzugter mindestens 72 Stunden unterzogen worden ist.

11. Verwendung des Pulvers nach einem der Ansprüche 1 bis 6 in dem Verfahren nach einem der Ansprüche 7 bis 10, wobei das Pulver in mehreren aufeinander folgenden Konstruktionen wiederverwendbar ist.

12. Dreidimensionaler Artikel, der aus dem Pulver nach einem der Ansprüche 1 bis 6 mit dem Verfahren nach einem der Ansprüche 7 bis 10 erhalten wird.

## Claims

1. Poly(ether-ketone-ketone) powder comprising a weight content of from 1 to 10 ppm of Fe.

2. Powder according to Claim 1, having been subjected to a heat treatment.

3. Powder according to Claim 2, wherein the heat treatment is carried out at a temperature of the order of 10°C to 60°C below the melting temperature of the powder, or of the order of 80°C to 100°C below the melting temperature of the powder.

4. Powder according to one of Claims 1 to 3, **characterized in that** it comprises a weight content of aromatic ether of from 0 to 0.4% and/or a weight content of aluminium of less than 1000 ppm, preferably less than 600 ppm and more preferably less than 500 ppm.

5. Powder according to Claim 4, wherein the aromatic ether is (1,4-phenoxybenzoyl)benzene.

6. Powder according to one of Claims 1 to 5, **characterized in that** it comprises a weight content of non-alkali metals other than iron and aluminium of less than 100 ppm, preferably less than 50 ppm, and more preferably less than 10 ppm.

7. Process for the layer-by-layer construction of a three-dimensional object by electromagnetic radiation-mediated powder sintering, **characterized in that** the powder used is in accordance with one of Claims 1 to 6.

8. Process according to Claim 7, wherein the powder is at least partly recycled from a previous layer-by-layer construction of a three-dimensional object by electromagnetic radiation-mediated powder sintering.

9. Process according to Claim 8, wherein at least one portion of the powder has been subjected to at least 2 recycling operations, preferably at least 3 recycling operations, more preferably at least 5 recycling operations.

10. Process according to either of Claims 7 and 8, wherein at least one portion of the powder has been subjected to a temperature of 260 to 290°C for a cumulative time of at least 2 hours, preferably at least 10 hours, more preferably at least 24 hours, more preferably at least 72 hours.

11. Use of the powder according to one of Claims 1 to 6, in the process according to one of Claims 7 to 10, said powder being reusable in several successive constructions.

12. Three-dimensional article obtained from the powder according to one of Claims 1 to 6, via the process according to according to one of Claims 7 to 10.
